# EUROPÄISCHE PATENTANMELDUNG

(11) **EP 0 735 548 A1**
(43) Veröffentlichungstag der Anmeldung: **02.10.1996**
(21) Anmeldenummer: 96103408.9
(22) Anmeldetag: 05.03.1996
(51) Int. Cl.: H01F 1/055, C23F 1/28, G01N 27/72

(54) **Behandlungsverfahren für Magnete zur optischen Kennzeichnung der magnetischen Vorzugsrichtung**

(30) Priorität: 31.03.1995 DE 19511921
(71) Anmelder: Vacuumschmelze GmbH, 63450 Hanau (DE)
(72) Erfinder: Zapf, Lothar, Dr., 63755 Alzenau (DE)
(74) Vertreter: Fuchs, Franz-Josef, Dr.-Ing.

(57) **Zusammenfassung**

Zur Kennzeichnung der Polflächen von Sm₂Co₁₇-Magneten werden diese in einer sauren Wasserstoffperoxid-Beizlösung behandelt, die einen Zusatz von 1 bis 10 % Säure enthält. Durch diesen Verfahrensschritt ergibt sich auf den Polflächen eine glänzende Oberfläche, während die Flächen parallel zur Vorzugsrichtung matt und grau aussehen. Hierdurch läßt sich die magnetische Vorzugsrichtung beim Einbau von entmagnetisierten Magneten eindeutig erkennen, ohne daß es erforderlich ist, während des Herstellprozesses die Magnete einzeln zu kennzeichnen.

## Beschreibung

Die Erfindung betrifft ein Behandlungsverfahren zur Reinigung von Magnetkörpern, die Kobalt und eine oder mehrere der Seltenen Erden sowie eine magnetische Phase SE₂Co₁₇ enthalten, wobei mit SE eine oder mehrere der Seltenen Erden bezeichnet ist und Co Kobalt bedeutet.

Magnete, die u. a. eines oder mehrere der Seltenen Erden sowie Kobalt enthalten, sind beispielsweise aus DE-AS 21 21 453 bekannt. Derartige Magnete haben eine relativ hohe Koerzitivkraft in einer bestimmten Vorzugsrichtung der Magnetisierung, so daß es im Gegensatz zu früheren Magneten aus Eisen nicht mehr erforderlich ist, die Länge des Magneten groß gegenüber dem Querschnitt zu wählen. Dies bringt mit sich, daß auch würfelförmige oder annähernd würfelförmige Magnete zur Anwendung kommen, die sich u. U. auch noch durch relativ kleine Abmessungen auszeichnen, wie dies beispielsweise für Magnete der Fall ist, die in Motoren von Armbanduhren oder dgl. eingebaut werden.

Derartige Magnete werden nach der Herstellung entmagnetisiert und in diesem Zustand zu Magnetsystemen zusammengesetzt, da entmagnetisierte Magnete im Gegensatz zu aufmagnetisierten leichter handhabbar sind. Bei derartigen Magneten erfolgt die Aufmagnetisierung erst nach der Montage.

Insbesondere bei würfelförmig- oder annähernd würfelförmig ausgebildeten Magneten muß nun während der Montage darauf geachtet werden, daß die Magnete mit ihrer Vorzugsrichtung so eingebaut werden, daß sich die magnetische Vorzugsrichtung mit der späteren Magnetisierungsrichtung deckt. Für derartige Magnete ist es daher erforderlich, jeden einzelnen Magneten mit einer Kennzeichnung zu versehen, aus der sich die Vorzugsrichtung der Magnetisierung erkennen läßt. Insbesondere bei kleinen Magnetabmessungen, bei denen hohe Stückzahlen hergestellt werden, ist ein derartiges Kennzeichnungsverfahren aufwendig, da beispielsweise eine Kennzeichnung durch Eingravierung oder Einfärbung es erfordert, daß die Teile vereinzelt werden müssen und während des Herstellverfahrens zuverlässig in der jeweils richtigen Richtung gekennzeichnet werden.

Aufgabe der vorliegenden Erfindung ist es, ein Verfahren anzugeben, mit dem eine Kennzeichnung auch kleiner würfelförmiger Magnete auf einfache Weise durchgeführt werden kann. Das erfindungsgemäße Verfahren besitzt dabei den Vorteil, daß die Teile nicht einzeln behandelt werden müssen, sondern als Schüttgut während des üblichen Reinigungsverfahrens der Magnete ihre Kennzeichnung durch einen zusätzlichen Verfahrensschritt erhalten.

Die Lösung besteht erfindungsgemäß darin, daß als ein Verfahrensschritt zur Kennzeichnung der Vorzugsrichtung der Magnetisierbarkeit die Magnete in einer Wasserstoffperoxid-Lösung mit Säurezusatz gebeizt werden.

Vorteilhafte Weiterbildungen sind in den Unteransprüchen beschrieben. Es wurde gefunden, daß die Polflächen der Magnete ein glänzendes Aussehen erhalten, wenn sich beispielsweise in dem Magnetmaterial eine Sm₂Co₁₇-Phase befindet und die Magnete für mindestens 10 sec in eine Lösung aus Wasserstoffperoxid mit einem Zusatz einer Säure eingetaucht werden. Bei diesen Magneten sind die Flächen parallel zur Vorzugsrichtung im Gegensatz zu den hochglänzenden Polflächen matt grau und somit eindeutig optisch von diesen unterscheidbar.

Zusätzlich bewirkt der erfindungsgemäße Verfahrensschritt eine weitere Reinigungswirkung, so daß vorteilhafter Weise dieser Verfahrensschritt in das Behandlungsverfahren der Magnete zur Reinigung der Oberflächen einbezogen werden kann. Es hat sich herausgestellt, daß der Materialabtrag während des Beizschrittes in saurer Wasserstoffperoxid-Lösung weniger als 5 µm beträgt, so daß die Maßhaltigkeit der Magnete nicht wesentlich leidet.

Es wurde gefunden, daß die Erfindung auch dann eine brauchbare Kennzeichnung ergibt, wenn anstelle von Samarium andere der Seltenerd-Elemente verwendet werden. Außerdem können in dem Magneten neben Kobalt auch andere Elemente enthalten sein, wie sie vorzugsweise zu Seltenerd-Magneten zulegiert werden. Dies sind z. B. Fe, Co, Zr und andere Übergangselemente sowie Elemente der Hauptgruppen III bis VI im Periodensystem.

Als Ausführungsbeispiel wurde in eine Kleingalvanik-Trommel mit 380 ml Volumen 500 g Magnete mit einer Sm₂Co₁₇- Phase der Abmessung 5 x 5 x 4,8 mm gefüllt und bei einer Drehgeschwindigkeit von ca. 10 U/min die nachfolgend aufgeführten Verfahrensschritte nacheinander durchgeführt. Dabei entsprechen die Schritte 1 - 2 bzw. 4 - 6 der Standardreinigung. Der Schritt 3 stellt die zusätzliche Behandlung zur optischen Kennzeichnung der Vorzugsrichtung dar:
1. Abkochentfettung (wäßrig alkalisch)
2. Spülen in Stadtwasser
3. 30 sec Beizen in einer Lösung bestehend aus 0,5 l Salzsäure (conc) und 9,5 l Wasserstoffperoxid (35 %ig)
4. Spülen in Stadtwasser
5. Spülen in VE-Wasser
6. Trocknung der Teile im Umluftofen.

Nach der Behandlungsfolge weisen die Magnete auf den beiden Polflächen eine glänzende Oberfläche auf; die 4 Flächen parallel zur Vorzugsrichtung sehen matt und grau aus.

An einer Stichprobe von 10 Magneten wurde zur Überprüfung der Sauberkeit ein Tape-Test durchgeführt. Ergebnis: Die Magnete entsprechen in vollem Umfang den Anforderungen. Als Säurezusatz zur Wasserstoffperoxid-Beize lassen sich sowohl anorganische Säuren, wie Salzsäure, Schwefelsäure, Salpetersäure, Flußsäure oder eine Mischung daraus verwenden. Es ist aber auch möglich, organische Säuren, wie beispielsweise Zitronensäure, Essigsäure und ähnliche einzusetzen.

## Patentansprüche

1. Behandlungsverfahren zur Reinigung von Magnetkörpern, die Kobalt und eine oder mehrere der Seltenen Erden sowie eine magnetische Phase SE₂Co₁₇ enthalten, wobei mit SE eine oder mehrere der Seltenen Erden bezeichnet ist und Co Kobalt bedeutet, dadurch gekennzeichnet, daß als ein Verfahrensschritt zur Kennzeichnung der Vorzugsrichtung der Magnetisierbarkeit die Magnete in einer Wasserstoffperoxid-Lösung mit Säurezusatz gebeizt werden.

2. Verfahren nach Anspruch 1, dadurch gekennzeichnet, daß die saure Wasserstoffperoxid-Lösung aus einer Mischung aus Salzsäure und H₂O₂ besteht.

3. Verfahren nach Anspruch 1, dadurch gekennzeichnet, daß die Säure in der Wasserstoffperoxid-Lösung einen Anteil von 2 bis 10 % aufweist.

4. Verfahren nach Anspruch 1, dadurch gekennzeichnet, daß es am würfel- oder annähernd würfelförmigen Magneten durchgeführt wird.

5. Verfahren nach Anspruch 1, dadurch gekennzeichnet, daß die Magnete in einer sich drehenden Galvaniktrommel in die Beizlösung getaucht werden.

6. Verfahren nach Anspruch 1, dadurch gekennzeichnet, daß die Magnete in einem Korb gehalten und mit diesem in die Beizlösung getaucht werden.

7. Verfahren nach Anspruch 1, dadurch gekennzeichnet, daß der Beizvorgang unter Verwendung der sauren Wasserstoffperoxid-Lösung zwischen 10 sec und 1 min dauert.

8. Verfahren nach Anspruch 1, dadurch gekennzeichnet, daß als Säure Schwefelsäure, Salpetersäure, Salzsäure, Flußsäure oder eine Mischung daraus verwendet wird.

9. Verfahren nach Anspruch 1, dadurch gekennzeichnet, daß als Säure eine oder mehrere organische Säuren verwendet werden.
